# EUROPÄISCHE PATENTSCHRIFT

(11) **EP 1 845 002 B1**
(45) Veröffentlichungstag und Bekanntmachung des Hinweises auf die Patenterteilung: **17.06.2009**
(21) Anmeldenummer: 07007367.1
(22) Anmeldetag: 10.04.2007
(51) Int. Cl.: B60W 40/02, G01S 15/93

(54) **Verfahren zum Überwachen wenigstens eines Teils eines Fahrzeugumfeldes eines Fahrzeugs und System hierfür**
Method for monitoring at least part of the surrounding environment of a vehicles and system therefor
Procédé de surveillance d'au moins une partie d'un pourtour de véhicule d'un véhicule et système adapté

(30) Priorität: 11.04.2006 DE 102006018075
(43) Veröffentlichungstag der Anmeldung: 17.10.2007
(73) Patentinhaber: Valeo Schalter und Sensoren GmbH, 74321 Bietigheim-Bissingen (DE)
(72) Erfinder: Gotzig, Heinrich, 74081 Heilbronn (DE); Heimberger, Markus, 71732 Tamm (DE)
(74) Vertreter: Vötsch, Reiner

(56) Entgegenhaltungen:
- EP-A- 1 624 319
- EP-A- 1 643 270
- WO-A-20/04021546
- WO-A-20/04104623
- DE-A1- 10 139 341
- US-A- 6 044 336
- US-A1- 2005 073 433

## Beschreibung

Die Erfindung betrifft ein Verfahren zum Überwachen wenigstens eines Teils eines Fahrzeugumfeldes eines Fahrzeuges unter Verwendung von Sensoren, wobei Störsignale, die bei auf die Sensoren aufprallendem Niederschlag auftreten, mittels einer Filtereinrichtung wenigstens teilweise ausgefiltert werden. Die Erfindung betrifft auch ein System zur Durchführung des Verfahrens.

Derartige verfahren und Systeme sind aus dem Stand der Technik bekannt. Bei bekannten Umfeldüberwachungs- und/oder Parkhilfesystemen für Fahrzeuge werden in der Regel Ultraschall- oder Radarsensoren verwendet. Diese Sensoren werden in der Regel an der Oberfläche des Fahrzeugs angeordnet. Bei auftretendem Niederschlag, insbesondere bei starkem Regen, prallt Niederschlag auf die Sensoren beziehungsweise deren aktiven Flächen. Hierdurch werden an den Sensoren Schwingungen erzeugt, die von den Sensoren als Eingangssignal, und damit als Gegenstand im überwachten Fahrzeugumfeld interpretiert werden können. Um eine derartige Fehlinterpretation zu verhindern, finden Filtereinrichtungen Verwendung, die niederschlagstypische Störsignale im Betrieb der Sensoren ausfiltern. Eine Filterung der Eingangssignale schlägt sich allerdings negativ auf die Leistungsfähigkeit der Systeme nieder. Grundsätzlich kann nicht ausgeschlossen werden, insbesondere dann, wenn kein Regen vorhanden ist, dass Signale, die aus im überwachten Umfeld vorhandenen Gegenständen resultieren, mit ausgefiltert werden. Folglich verschlechtert sich bei einer Ausfilterung von Signalen die Performance der Sensoren bzw. des Systems.

Aus der gattungsbildenden US 2005/0073433 A1 ist ein Verfahren zur Umfeldüberwachung eines Fahrzeugumfeldes mit einem Umfeldüberwachungssystem bekannt, das an der Fahrzeugaußenseite angeordnete Sensoren aufweist. Das Überwachungssystem umfasst eine Filtereinrichtung zum Ausfiltern von Störsignalen, welche durch Niederschlag wie Regen oder Schnee hervorgerufen werden können. Dabei ist eine Messeinrichtung des Überwachungssystems vorgesehen, welche anhand der Messdaten der Sensoren ein für Niederschlag charakteristisches Frequenzmuster erkennt und den Filter nur bei vorhandenem Niederschlag einschaltet. Allerdings führt das Umfeldüberwachungssystem im Betriebszustand kontinuierlich Messungen zur Identifikation von Niederschlag durch, was sich nachteilig auf die Systemperformance auswirkt.

Aus der EP 1 624 319 A1 sind eine Vorrichtung sowie ein Verfahren zur Abstandsmessung eines in der Umgebung eines Kraftfahrzeuges angeordneten Hindernisses mittels einer Sensoreinrichtung bekannt, wobei die Sensoreinrichtung unter Berücksichtigung von Umgebungseinflüssen wie Temperatur, Luftfeuchtigkeit und Luftdruck kalibriert wird.

Die DE 101 39 341 A1 betrifft einen Ultraschallsensor für eine Hinderniswarnvorrichtung von Kraftwagen. Der Ultraschallsensor umfasst einen Sensorkörper, eine Membran sowie einen an der Membran befestigten Vibrator, wobei die Membran einen dünnsten Abschnitt mit vorbestimmter Dicke aufweist, bei welcher der Nachhall der Membran beschränkt ist. Durch diesen Aufbau soll der reflektierte Ultraschall fehlerfrei erfasst und der Einfluss von Störungen durch Regen reduziert werden.

Der vorliegenden Erfindung liegt die Aufgabe zugrunde, aus Niederschlag resultierende Störsignale auszufiltern, wobei die Leistungsfähigkeit der Sensoren beziehungsweise der Systeme aufgrund einer Ausfilterung möglichst nicht beeinträchtigt sein soll.

Diese Aufgabe wird durch ein Verfahren mit den Merkmalen des Anspruchs 1 gelöst. Dadurch, dass die Ausfilterung der Störsignale in Abhängigkeit von Informationen eines Niederschlagsensors erfolgt, kann die Ausfilterung je nach tatsächlich vom Niederschlagsensor festgestellten Niederschlag erfolgen. Anders als bei den bekannten Verfahren nach dem Stand der Technik, wo die Ausfilterung der typischen Niederschlag-Störsignale kontinuierlich, auch bei nicht vorhandenem Niederschlag, erfolgt, oder das Umfeldüberwachnungs- oder Parkhilfesystem kontiniuierlich ein Messverfahren zur Identifikation von Niederschlag ausführt, kann erfindungsgemäß die Ausfilterung in Abhängigkeit des tatsächlichen, vom Niederschlagsensor festgestellten Niederschlag erfolgen. Dabei kann gerade die Stärke der Ausfilterung von den Informationen des Niederschlagsensors abhängen.

Der Niederschlagssensor ist Teil eines Fahrzeugwischersystems und somit als selbstständige, unabhängig vom Umfeldüberwachungs- und/oder Parkhilfesystem betreibbare Einheit ausgebildet, so dass die Performance von Sensor und System durch den Niederschlagssensor nicht beeinträchtigt wird. Dies ist insbesondere deshalb vorteilhaft, weil bei modernen Fahrzeugen zur Ansteuerung einer Scheibenwischanlage Niederschlagsensoren sowieso am Fahrzeug vorhanden sind. Diese Niederschlagsensoren arbeiten grundsätzlich unabhängig von einem Umfeldüberwachungs- oder Parkhilfesystem. Dennoch finden gerade Informationen dieser Niederschlagsensoren erfindungsgemäß Verwendung.

Besonders vorteilhaft ist, wenn die vom Niederschlagsensor zur Verfügung gestellten Informationen die Stärke und/oder Art des Niederschlags beinhalten und wenn bei der Ausfilterung der Störsignale je nach Stärke und/oder Art des Niederschlags geeignete Filteralgorithmen Verwendung finden. Folglich kann hierdurch in optimaler Art und Weise die Ausfilterung an die jeweils tatsächlich gegebenen Umstände der Stärke und/oder Art des Niederschlags erfolgen. Grundsätzlich gilt dabei, dass je stärker der Niederschlag ist, desto stärker ist die Filterung. Die Art des Niederschlags kann dabei Regen, Graupel, Hagel oder Schnee sein. Mit geeigneten Niederschlagsensoren kann die jeweilige Art des Niederschlags bestimmt werden.

Besonders vorteilhaft ist, wenn eine Ausfilterung der Störsignale dann nicht erfolgt oder nur geschwächt erfolgt, wenn vom Niederschlagsensor kein Niederschlag erkannt wird. Dadurch wird die Performance der Sensoren beziehungsweise des Systems bei nicht vorhandenem Niederschlag optimiert.

Gemäß einer weiteren Ausgestaltung der Erfindung ist denkbar, dass die Ausfilterung der Störsignale zusätzlich auch in Abhängigkeit von Informationen eines Temperatursensors erfolgt. Unter Kenntnis der Außentemperatur kann die Art des Niederschlags besser unterschieden werden. Bei Niederschlag, der unterhalb der 0°-Grenze auftritt, kann beispielsweise davon ausgegangen werden, dass es sich bei dem Niederschlag um Schnee handelt. Insofern kann eine noch bessere Abstimmung der Ausfilterung der Störsignale erfolgen.

Da insbesondere Ultraschall- oder Radarsensoren sehr niederschlagsempfindlich sind, kann das erfindungsgemäße Verfahren insbesondere dann Verwendung finden, wenn Signale derartiger Sensoren ausgewertet werden.

Die Informationen des Niederschlagsensors können der Filtereinrichtung über ein Fahrzeug-Bussystem zur Verfügung gestellt werden. Die Informationen des Niederschlagsensors werden dann auf dem Fahrzeug-Bussystem abgelegt und die Filtereinrichtung beziehungsweise das Umfeldüberwachungs- und/oder Parkhilfesystem hat Zugriff auf dieses Fahrzeug-Bussystem.

Die eingangs genannte Aufgabe wird auch durch ein Umfeldüberwachungs- und/oder Parkhilfesystem eines Fahrzeugs gelöst, das gemäß dem erfindungsgemäßen Verfahren arbeitet. Ein derartiges System weist insbesondere am Fahrzeug angeordnete Sensoren und eine Filtereinrichtung auf, wobei die Filtereinrichtung Störsignale, welche bei auf die Sensoren aufprallendem Niederschlag auftreten, wenigstens teilweise ausfiltert. Erfindungsgemäß ist die Filtereinrichtung dabei derart ausgebildet, dass sie im Betrieb des Systems die Ausfilterung der Störsignale in Abhängigkeit von Informationen eines ohnehin vorhandenen Niederschlagsensors vornimmt, der Teil eines Fahrzeugwischersystems ist und somit als selbstständige, unabhängig vom Umfeldüberwachungs- und/oder Parkhilfesystem betreibbare Einheit ausgebildet ist. Wie bereits erwähnt, finden Niederschlagsensoren bei modernen Fahrzeugen insbesondere zur Steuerung von Wischeranlagen Verwendung.

Dabei können in der Filtereinrichtung verschiedene Filteralgorithmen hinterlegt sein, wobei der Niederschlagsensor dann derart ausgebildet ist, dass er die Stärke und/oder Art des Niederschlags bestimmen kann. Je nach Stärke und/oder Art des Niederschlags kann dann ein geeigneter Filteralgorithmus zur Ausfilterung der Störsignale Verwendung finden.

Wie bereits angesprochen, kann die Filtereinrichtung derart ausgebildet sein, dass sie im Betrieb des Systems die Ausfilterung der Störsignale zusätzlich in Abhängigkeit von Informationen eines Temperatursensors vornimmt. Hierdurch kann die Art des Niederschlags zusätzlich spezifiziert werden.

Als Sensoren können insbesondere Ultraschall- oder Radarsensoren Verwendung finden. Die Filtereinrichtung kann dabei, wie bereits angesprochen, an ein Fahrzeug-Bussystem angebunden sein, auf dem die Informationen des Niederschlagsensors abgelegt sind.

Weitere vorteilhafte Ausgestaltungen und Einzelheiten der Erfindung sind der nachfolgenden Beschreibung zu entnehmen, die das in der Figur dargestellte Ausführungsbeispiel der Erfindung näher erläutert und beschreibt.

In der Figur ist eine schematische Draufsicht auf ein Fahrzeug 10 dargestellt. Das Fahrzeug 10 umfasst ein Parkhilfesystem 12, mit am hinteren Bereich des Fahrzeugs angeordneten drei Ultraschall- oder Radarsensoren 14. Die Sensoren überwachen dabei insbesondere beim Rückwärtsfahren das hintere Umfeld des Fahrzeugs. Das System umfasst ferner eine Auswerte- und Filtereinrichtung 16, die die Sensoren 14 ansteuert und die von den Sensoren 14 empfangenen Signale filtert und auswertet. Ferner weist das System 16 eine Ausgabeeinheit 18 auf, die den Fahrzeuglenker vor einer möglichen Kollision von Gegenständen, die mit den Sensoren 14 detektiert werden, warnt. Die Warnung kann dabei beispielsweise akustisch sein oder mittels einer Anzeige auf einem Display erfolgen.

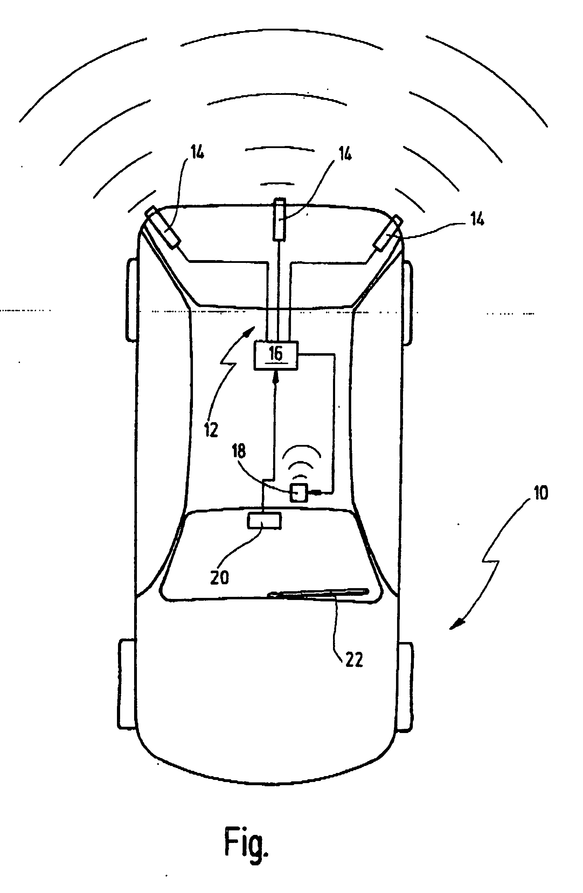

Das Fahrzeug 10 sieht ferner einen Niederschlagsensor 20 vor, der im Bereich der Frontscheibe des Fahrzeugs angeordnet ist. In der Figur 1 zudem ein Frontwischer 22 dargestellt, der die Vorderscheibe sowie den vom Niederschlagsensor 20 überwachten Scheibenbereich wischt. Der Niederschlagsensor 20 ist dabei Teil eines Fahrzeugwischersystems sein und steuert den Motor des Wischers je nach detektiertem Niederschlag an.

Im Betrieb des Parkhilfesystems 12 filtert die Auswerte- und Filtereinrichtung 16 die von den Sensoren 14 empfangenen Signale und wertet diese aus. Die Filterung beinhaltet dabei eine Ausfilterung von Störsignalen, die bei auf die Sensoren aufprallendem Niederschlag auftreten. Die Auswerte- und Filtereinheit 16 ist dabei so ausgebildet, dass sie die Ausfilterung der niederschlagsbedingten Störsignale in Abhängigkeit von Informationen des Niederschlagsensors 20 vornimmt. Dabei erfolgt die Ausfilterung der niederschlagsbedingten Störsignale in Abhängigkeit der Stärke und Art des vom Niederschlagsensor 20 erkannten Niederschlages. Dazu können vorteilhafterweise in der Auswerte- und Filtereinrichtung 16 verschiedene Filteralgorithmen hinterlegt sein, die je nach Stärke und Art des Niederschlags zur Ausfilterung von niederschlagsbedingten Störsignalen Verwendung finden. Eine Ausfilterung der niederschlagsbedingten Störsignale findet dabei nur dann statt, wenn vom Niederschlagsensor 20 tatsächlich Niederschlag erkannt wird. Dies hat den Vorteil, dass bei keinem erkannten Niederschlag keine Ausfilterung der niederschlagsbedingten Störsignale erfolgt, wobei dadurch die Leistungsfähigkeit des Systems 12 beziehungsweise der Sensoren 14 maximiert wird.

Die vom Niederschlagsensor 20 bereitgestellten Informationen können auf einem Fahrzeug-Bussystem abgelegt sein, auf welches die Auswerte- und Filtereinrichtung 16 Zugriff hat. Hierdurch können auf einfache Art und Weise die vom Niederschlagsensor 20 generierten Informationen der Auswerte- und Filtereinrichtung 16 zur Verfügung gestellt werden.

Um noch zusätzliche Informationen über die Art des Niederschlags zu erhalten, kann vorgesehen sein, dass die Auswerte- und Filtereinrichtung 16 zusätzlich Informationen von einem in den Figuren nicht dargestellten Temperatursensor erhält.

## Patentansprüche

1. Verfahren zum Überwachen wenigstens eines Teil eines Fahrzeugumfelds eines Fahrzeuges (10) unter Verwendung wenigstens eines Sensors (14), wobei Störsignale, die bei auf den Sensor (14) aufprallendem Niederschlag auftreten, mittels einer Filtereinrichtung (16) wenigstens teilweise ausgefiltert werden, **dadurch gekennzeichnet, dass** die Ausfilterung der Störsignale in Abhängigkeit von Informationen eines Niederschlagsensors (20) erfolgt, der Teil eines Fahrzeugwischersystems ist.

2. Verfahren nach Anspruch 1, **dadurch gekennzeichnet, dass** die vom Niederschlagsensor (20) zur Verfügung gestellten Informationen die Stärke und/oder Art des Niederschlags beinhalten und dass bei der Ausfilterung der Störsignale je nach Stärke und/oder Art des Niederschlags geeignete Filteralgorithmen Verwendung finden.

3. Verfahren nach Anspruch 1 oder 2, **dadurch gekennzeichnet, dass** die Stärke der Ausfilterung der Störsignale in Abhängigkeit von Informationen des Niederschlagsensors (20) erfolgt.

4. Verfahren nach Anspruch 1, 2 oder 3, **dadurch gekennzeichnet, dass** eine schwächere oder keine Ausfilterung der Störsignale dann erfolgt, wenn vom Niederschlagssensor (20) kein Niederschlag erkannt wird.

5. Verfahren nach wenigstens einem der vorhergehenden Ansprüche, **dadurch gekennzeichnet, dass** die Ausfilterung der Störsignale zusätzlich auch in Abhängigkeit von Informationen eines Temperatursensors erfolgt.

6. Verfahren nach wenigstens einem der vorhergehenden Ansprüche, **dadurch gekennzeichnet, dass** der wenigstens eine Sensor (14) Ultraschall- oder Radarsignale aussendet und/oder empfängt.

7. Verfahren nach wenigstens einem der vorhergehenden Ansprüche, **dadurch gekennzeichnet, dass** die Filtereinrichtung (16) die Informationen des Niederschlagssensors über ein Fahrzeug-Bussystem erhält.

8. Umfeldüberwachungs- und/oder Parkhilfesystem (12) eines Fahrzeuges (10), mit am Fahrzeug (10) angeordneten Sensoren (14) und mit einer Filtereinrichtung (16), die Störsignale, welche bei auf die Sensoren (14) aufprallendem Niederschlag auftreten, wenigstens teilweise ausfiltert, **dadurch gekennzeichnet, dass** die Filtereinrichtung (16) derart ausgebildet ist, dass sie im Betrieb des Systems (12) die Ausfilterung der Störsignale in Abhängigkeit von Informationen eines Niederschlagsensors (20) vornimmt, der Teil eines Fahrzeugwischersystems ist.

9. System (12) nach Anspruch 8, **dadurch gekennzeichnet, dass** die Stärke der Ausfilterung der Störsignale in Abhängigkeit von Informationen des Niederschlagsensors (20) erfolgt.

10. System (12) nach Anspruch 8 oder 9, **dadurch gekennzeichnet, dass** in der Filtereinrichtung (16) verschiedene Filteralgorithmen hinterlegt sind und dass der Niederschlagssensor (20) derart ausgebildet ist, dass er die Stärke und/oder Art des Niederschlags bestimmen kann, wobei je nach die Stärke und/oder Art des Niederschlags ein geeigneter Filteralgorithmus zur Ausfilterung der Störsignale Verwendung findet.

11. System (12) nach Anspruch 8, 9 oder 10, **dadurch gekennzeichnet, dass** die Filtereinrichtung (16) derart ausgebildet ist, dass im Betrieb des Systems (12) die Filtereinrichtung (16) die Ausfilterung der Störsignale zusätzlich in Abhängigkeit von Informationen eines Temperatursensors vornimmt.

12. System (12) nach wenigstens einem der Ansprüche 8 bis 11, **dadurch gekennzeichnet, dass** die Sensoren (14) Ultraschall- und/oder Radarsensoren sind.

13. System (12) nach wenigstens einem der Ansprüche 8 bis 12, **dadurch gekennzeichnet, dass** die Filtereinrichtung (16) an ein Fahrzeug-Bussystem angebunden ist, auf dem die Informationen des Niederschlagsensors (20) abgelegt sind.

## Claims

1. Method for monitoring at least part of the surrounding environment of a vehicle (10) using at least one sensor (14), wherein interference signals which occur when there is precipitation impacting on the sensor (14) are at least partially filtered out by means of a filter device (16), **characterized in that** the interference signals are filtered out as a function of information of a precipitation sensor (20) which is part of a vehicle wiper system.

2. Method according to Claim 1, **characterized in that** the information provided by the precipitation sensor (20) includes the intensity and/or type of precipitation, and **in that** filter algorithms which are suitable depending on the intensity and/or type of precipitation are used for the filtering out of the interference signals.

3. Method according to Claim 1 or 2, **characterized in that** the degree of filtering out of the interference signals depends on information from the precipitation sensor (20).

4. Method according to Claim 1, 2 or 3, **characterized in that** relatively weak or no filtering of the interference signals is carried out if no precipitation is detected by the precipitation sensor (20).

5. Method according to at least one of the preceding claims, **characterized in that** the filtering out of the interference signals is also additionally carried out as a function of information from a temperature sensor.

6. Method according to at least one of the preceding claims, **characterized in that** the at least one sensor (14) emits and/or receives ultrasonic signals or radar signals.

7. Method according to at least one of the preceding claims, **characterized in that** the filter device (16) receives the information from the precipitation sensor via a vehicle bus system.

8. Surrounding-environment-monitoring and/or parking-assistance system (12) of a vehicle (10), having sensors (14) which are arranged on the vehicle (10) and having a filter device (16) which at least partially filters out interference signals which occur when precipitation impacts on the sensors (14) **characterized in that** the filter device (16) is embodied in such a way that during operation of the system (12) said filter device (16) filters out the interference signals as a function of information from a precipitation sensor (20) which is part of a vehicle wiper system.

9. System (12) according to Claim 8, **characterized in that** the degree of filtering out of the interference signals depends on information from the precipitation sensor (20).

10. System (12) according to Claim 8 or 9, **characterized in that** different filter algorithms are stored in the filter device (16), and **in that** the precipitation sensor (20) is embodied in such a way that it can determine the intensity and/or type of precipitation, wherein a suitable filter algorithm is used for filtering out the interference signals depending on the intensity and/or type of precipitation.

11. System (12) according to Claim 8, 9 or 10, **characterized in that** the filter device (16) is embodied in such a way that during operation of the system (12) the filter device (16) performs the filtering out of the interference signals additionally as a function of information from a temperature sensor.

12. System (12) according to at least one of Claims 8 to 11, **characterized in that** the sensors (14) are ultrasonic sensors and/or radar sensors.

13. System (12) according to at least one of Claims 8 to 12, **characterized in that** the filter device (16) is connected to a vehicle bus system on which the information from the precipitation sensor (20) is stored.

## Revendications

1. Procédé de surveillance d'au moins une partie de l'environnement d'un véhicule (10) par recours à au moins un détecteur (14), dans lequel des signaux parasites qui surviennent lorsque des précipitations viennent frapper le détecteur (14) sont extraits au moins partiellement à l'aide d'un dispositif de filtrage (16),
**caractérisé en ce que**
l'extraction des signaux parasites par filtrage s'effectue en fonction d'informations d'un détecteur (20) de précipitations qui fait partie du système d'essuie-glace du véhicule.

2. Procédé selon la revendication 1, **caractérisé en ce que** les informations délivrées par le détecteur (20) de précipitations contiennent l'intensité et/ou la nature des précipitations et **en ce que** lors de l'extraction des signaux parasites par filtrage, on utilise des algorithmes de filtrage appropriés en fonction de l'intensité et/ou de la nature des précipitations.

3. Procédé selon les revendications 1 ou 2, **caractérisé en ce que** le niveau d'extraction des signaux parasites par filtrage dépend des informations du détecteur (20) de précipitations.

4. Procédé selon les revendications 1, 2 ou 3,
**caractérisé en ce qu'**une extraction des signaux parasites par filtrage est plus faible ou n'intervient pas si aucune précipitation n'est détectée par le détecteur (20) de précipitations.

5. Procédé selon au moins l'une des revendications précédentes, **caractérisé de plus en ce que** l'extraction des signaux parasites par filtrage s'effectue aussi en fonction des informations d'une sonde de température.

6. Procédé selon au moins l'une des revendications précédentes, **caractérisé en ce que** le ou les détecteurs (14) émettent et/ou reçoivent des signaux d'ultrasons ou radar.

7. Procédé selon au moins l'une des revendications précédentes, **caractérisé en ce que** le dispositif de filtrage (16) reçoit les informations du détecteur de précipitations par l'intermédiaire du système de bus du véhicule.

8. Système (12) de surveillance de l'environnement et/ou d'assistance au stationnement d'un véhicule (10), qui présente des détecteurs (14) disposés sur le véhicule (10) et un dispositif de filtrage (16) qui extrait par filtrage au moins une partie des signaux parasites qui surviennent lorsque des précipitations viennent frapper les détecteurs (14),
**caractérisé en ce que**
le dispositif de filtrage (16) est configuré de manière à, lorsque le système (12) est en fonctionnement, entreprendre l'extraction des signaux parasites par filtrage en fonction d'informations d'un détecteur (20) de précipitations qui fait partie du système d'essuie-glace du véhicule.

9. Système (12) selon la revendication 8, **caractérisé en ce que** le niveau d'extraction des signaux parasites par filtrage dépend d'informations du détecteur (20) de précipitations.

10. Système (12) selon les revendications 8 ou 9, **caractérisé en ce que** différents algorithmes de filtrage sont conservés dans le dispositif de filtrage (16) et **en ce que** le détecteur (20) de précipitations est configuré de manière à pouvoir déterminer l'intensité et/ou la nature des précipitations et **en ce qu'**un algorithme de filtrage approprié selon l'intensité et/ou la nature des précipitations est utilisé pour extraire les signaux parasites par filtrage.

11. Système (12) selon les revendications 8, 9 ou 10, **caractérisé en ce que** le dispositif de filtrage (16) est configuré de telle sorte que lorsque le système (12) est en fonctionnement, le dispositif de filtrage (16) assure en outre l'extraction des signaux parasites par filtrage en fonction d'informations d'une sonde de température.

12. Système (12) selon au moins l'une des revendications 8 à 11, **caractérisé en ce que** les détecteurs (14) sont des détecteurs à ultrasons et/ou radar.

13. Système (12) selon au moins l'une des revendications 8 à 12, **caractérisé en ce que** le dispositif de filtrage (16) est raccordé à un système de bus du véhicule sur lequel les informations du détecteur (20) de précipitations sont délivrées.
